# EUROPEAN PATENT APPLICATION

(11) **EP 3 637 439 A1**
(43) Date of publication of application: **15.04.2020**
(21) Application number: 19201119.5
(22) Date of filing: 02.10.2019
(51) Int. Cl.: H01B 11/00, H01B 11/06

(54) **TWISTED PAIR CABLE AND UNSHIELDED CABLE USING THE TWISTED PAIR CABLE**

(30) Priority: 09.10.2018 CN 201811173105
(71) Applicant: Aptiv Electric Systems Co., Ltd., Shanhai, Shanghai 201814 (CN)
(72) Inventor: LI, Gaoyong, Shanghai, Shanghai 201814 (CN); LI, Zhanggang, Shanghai, Shanghai 201814 (CN)
(74) Representative: Westphal, Mussgnug & Partner Patentanwälte mbB

(57) **Abstract**

A twisted pair cable and unshielded cable using the twisted pair cable. The twisted pair cable comprises two core wires. Each core wire includes a conductor (1) and an insulating layer (2) wrapping the conductor (1). The two core wires are twisted together to form a twisted pair structure. The two core wires are bonded by an adhesive (3), resulting in a more stable structure.

## Description

The present invention relates to cable, and particularly relates to a twisted pair cable and an unshielded cable using the twisted pair cable.

Vehicle intelligence, networking and even auto-driving are surging, which brings about the continuous innovation of advanced driving assistance system (ADAS) technology, the promotion of high-quality vehicle video and audio entertainment, and the development of a series of technologies, such as OTA remote upgrade, V2X (vehicle to everything), big data and cloud computing. The above mentioned innovation, promotion and development further promote the explosive development of vehicle network capacity demand, which obviously goes beyond the capability of traditional vehicle network, such as CAN (Controller Area Network) or FLEXRAY®. So it is a good opportunity for the deep integration between Ethernet and vehicles.

Vehicle Ethernet not only has the bandwidth required to adapt to ADAS, video and audio entertainment, vehicle networking, etc., but also has the potential to support higher performance in the future (such as greater data transmission required in the era of auto-driving). It will become the cornerstone of realizing multi-layer highspeed communication. It will be larger in scale and more far-reaching in significance, as compared with the controller area network (CAN) revolution in the 1990s. Experts predict that 500 million Ethernet ports will be deployed in vehicles by 2020.

In vehicle Ethernet technology, UTP (unshielded twisted pair) is of the most cost-effective type. In the unshielded structure, a shielding jacket (such as metal shielding material) does not need to be provided within inner layer of a jacket, resulting in low cost, flexibility in networking, and easy in installation. Moreover, when installing shielded twisted pairs, the shielding jackets of twisted pairs must be grounded. During actual practice, it is difficult to make it completely grounded, so that the shielding jacket itself becomes the biggest interference source, resulting in performance even far inferior to that of unshielded twisted pair cable. However, since UTP cable has no shielding jacket, twisted pair cable(s) within UTP cable is easy to deform or even disperse due to vibration or bending. So UTP cable is unstable in structure and further in signal transmission.

In view of the above, the object of the present invention is to provide a twisted pair cable with stable structure and unshielded cable using the twisted pair cable.

One aspect of the invention is a twisted pair cable, comprising two core wires, wherein each core wire includes a conductor and an insulating layer wrapping the conductor, the two core wires are twisted together to form a twisted pair structure, and the two core wires are bonded by an adhesive.

In at least one embodiment of the invention, the adhesive is a room temperature curable adhesive.

In at least one embodiment of the invention, the adhesive is coated on a surface of the insulating layer of the core wire.

In at least one embodiment of the invention, a cross-sectional area of the core wire is in a range of 0.13 mm² to 0.5 mm².

In at least one embodiment of the invention, a coating thickness of the adhesive on the surface of the insulating layer is in a range of 0.01 mm to 0.1 mm.

In at least one embodiment of the invention, the twisted pair cable has a twisted pitch of 8 mm to 22 mm.

In at least one embodiment of the invention, a twisted separation force of the two core wires is 5N to 30N.

In at least one embodiment of the invention, the twisted separation force of the two core wires is 5N to 10N.

Another aspect of the invention is an unshielded cable, wherein the unshielded cable comprises four groups of the twisted pair cables as described in any paragraph of the above paragraphs, a cross-shaped skeleton and a jacket, the cross-shaped skeleton divides an inner space of the jacket into four chambers, and the four groups of the twisted pair cables are distributed in the four chambers.

According to the twisted pair cable of the invention to be employed, an adhesive is coated on the surfaces of two core wires to be twisted. The adhesive is to form a connection structure between the core wires after the twisting is completed, thus ensuring the structure stability of the twisted pair cable in use, especially in the environment of frequent vibration, so as to ensure stable electrical performance and stable signal transmission.

The present invention will now be described, by way of example with reference to the accompanying drawings, in which:
Fig. 1 is a cross-sectional view showing the structure of a twisted pair cable as a reference example;
Fig. 2 is a cross-sectional view showing the structure of an unshielded cable as a reference example;
Fig. 3 is a cross-sectional view showing the structure of a twisted pair cable according to an embodiment of the present invention; and
Fig. 4 is a cross-sectional view showing the structure of an unshielded cable of the twisted pair cable of an embodiment of the present invention.

In the detailed description of the embodiments of the present invention, for ease of illustration, a sectional diagram representing a device structure will not be partially amplified in accordance with the general proportion, and the schematic diagram is only an example, which herein should not limit the protection scope of the present invention. In addition, three-dimensional dimensions of length, width and depth should be included in the actual production.

In the context of this application, for structure being described as having a first feature that is "on" a second feature, it shall encompass embodiments in which the first and second features are formed into direct contact, and also encompass embodiments in which additional feature(s) is formed between the first and second features such that the first and second features may not be in direct contact.

Specific terms are used to describe the embodiments of this application. For example, "one embodiment", "an embodiment", and/or "some embodiments" mean/means a certain feature, structure or characteristic related to at least one embodiment of this application. Therefore, it should be emphasized and noted that "an embodiment" or "one embodiment" or "an alternative embodiment" referred to twice or more times in different locations in this Description does not necessarily refer to the same embodiment. In addition, certain features, structures or characteristics in one or more embodiments of this application may be appropriately combined.

It should be noted that, in order to simplify the contents disclosed by this application and thus help to understand one or more embodiments of this invention, in the preceding description of the embodiments of this application, various features are sometimes incorporated into one embodiment, one accompanying drawing or the description thereof. However, such disclosure approach does not mean that the subject matter of this application needs more features than those mentioned in the Claims. In fact, the features of the embodiments are less than the entirety of the features of the individual embodiment disclosed above.

In some embodiments, the numerical parameters used in the Description and Claims are approximate values, which can be changed according to the characteristics required by particular embodiments. In some embodiments, the numerical parameters should take into account the prescribed valid digits and employ a general digits preservation approach. Although in some embodiments of this application, the numerical domains and parameters used to confirm a range breadth are approximate values, in concrete implementation, setting of these values shall be as precise as possible within a feasible range.

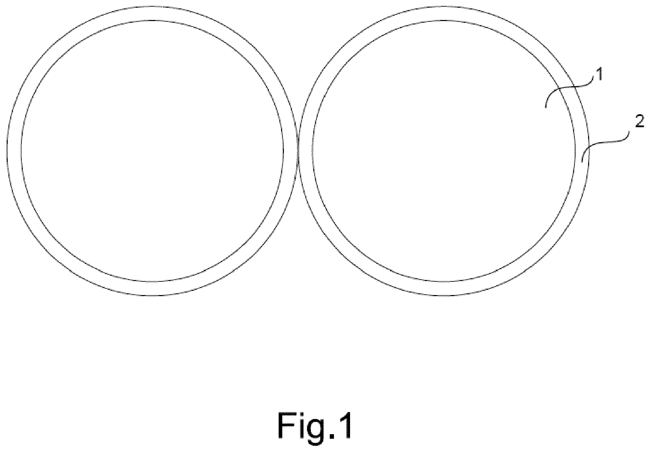

Fig. 1 is a cross-sectional view showing the structure of a twisted pair cable as a reference example.

As shown in Fig. 1, the twisted pair cable of the reference example comprises two core wires, each of which consists of a conductor 1 and an insulating layer 2 wrapping the conductor 1. The twisted pair structure shown in Fig. 1 is formed by twisting two such cores together.

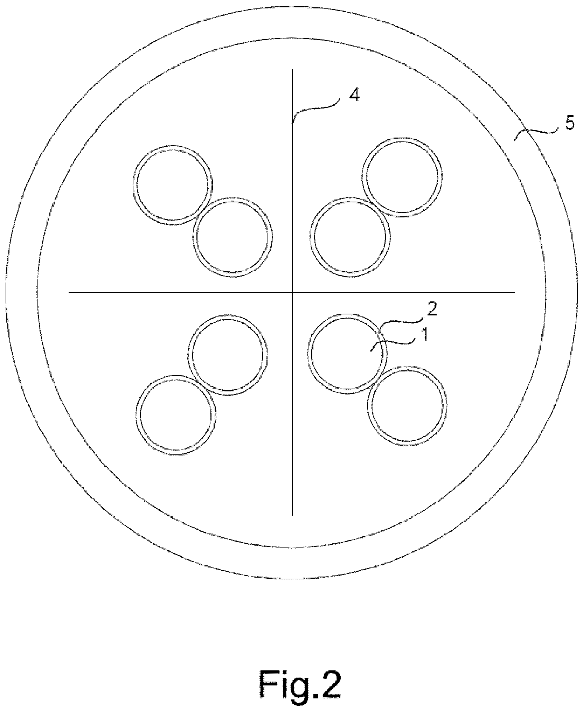

Fig. 2 is a cross-sectional view showing the structure of an unshielded cable as a reference example. As shown in Fig. 2, four groups of twisted pair cables as shown in Fig. 1 are provided in the unshielded cable. The unshielded cable also includes a cross-shaped skeleton 4 and a jacket 5. The cross-shaped skeleton 4 divides the inner space of the jacket 5 into four chambers. The above four groups of twisted pair cables are distributed in the four chambers.

As described above, because the unshielded cable has no shielding jacket, the twisted pair cables inside the unshielded cable are easy to deform or even disperse due to vibration or bending, causing instability in the structure and further in the signal transmission. To this end, the applicant proposes the twisted pair cable according to the present invention and the unshielded cable using the twisted pair cable.

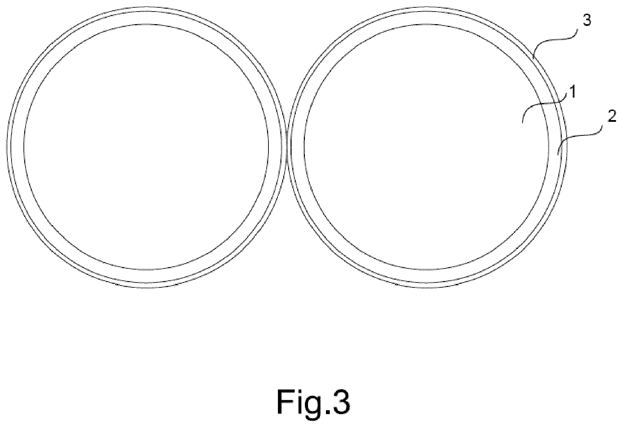

Fig. 3 is a cross-sectional view showing the structure of a twisted pair cable according to an embodiment of the present invention.

As shown in Fig. 3, the twisted pair cable of the invention comprises two core wires, and each core wire consists of a conductor 1 and an insulating layer 2 wrapping the conductor 1.

The conductor 1 may be formed of conductive materials such as copper. The insulating layer 2 may, for example, be formed of polypropylene (PP), polyethylene (PE), cross-linked polyethylene (XLPE), etc..

In addition, an adhesive 3 is coated on the outer side of the insulating layer 2 of each core wire. The adhesive 3 is preferred to be a room temperature curable adhesive.

In this way, the adhesive 3 may be coated on the two core wires respectively before or during the twisting process. After the twisting process is completed, the adhesive 3 will be cured at room temperature, thus forming a stable connection for connecting the two core wires.

A cross-sectional area of each core wire may be in a range of 0.13 mm² to 0.5 mm². A coating thickness of the adhesive 3 on the insulating layer 2 may be in a range of 0.01 mm to 0.1 mm. A core wire twisting pitch can be in a range of 10 mm to 20 mm. Among them, the twisting pitch is a main parameter of the twisting process, which is defined as a length of a twisting cycle of the twisted pair. The smaller the pitch (the denser the twisted wire), the stronger the anti-interference ability. According to the factors such as coating thickness of the adhesives 3, material to be used for the adhesives 3, etc., the twisted separation force (i.e. bond force) of the two core wires may be in a range of 5N to 30N, and a preferred range of 5N to 10N.

In this way, on the basis of the original twisted pair structure, the adhesive 3 further strengthens the bond between the two core wires, which makes the twisted pair cable of this embodiment have a more stable structure and uneasy to be deformed or even dispersed due to vibration or bending, and ensures a maximum pitch invariance of the wire pair. Therefore, the cable has stable electrical performance and can transmit signals stably.

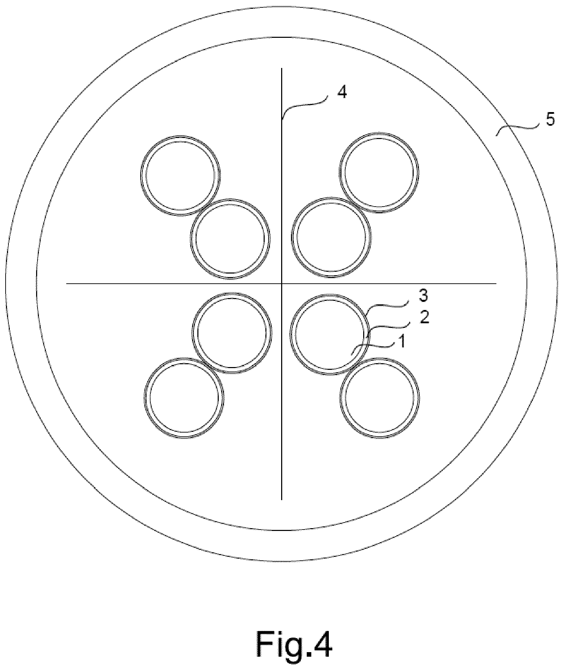

Fig. 4 is a cross-sectional view showing the structure of an unshielded cable of the twisted pair cable of an embodiment of the present invention.

As shown in Fig. 4, four groups of twisted pair cables as shown in Fig. 3 are provided in the unshielded cable. The unshielded cable also includes a cross-shaped skeleton 4 and a jacket 5.

The jacket 5 may be formed, for example, of polyvinyl chloride (PVC) or others. The cross-shaped skeleton 4 divides the inner space of the jacket 5 into four chambers. The above four groups of twisted pair cables are distributed in the four chambers.

As compared to conventional unshielded cable, the unshielded cable of this embodiment has a more stable structure. Even without shielding jackets, the stability of the internal twisted pair cables can be strengthened by using the adhesive 3.

The unshielded cable with the above structure can meet the standard requirements of CAT6 (category 6), can be used in the Gigabit/10-Gigabit Ethernet network and can exchange data at 1G rate. It should be understood that the 8-core unshielded cable shown herein is only one example, and the twisted pair cable of the invention may also be used for a cable with other specifications or other constructions.

The following examples relate to further embodiments. The following examples of the disclosure include products.

According to
example 1, a twisted pair cable is provided, comprising two core wires, wherein each core wire includes a conductor and an insulating layer wrapping the conductor, the two core wires are twisted together to form a twisted pair structure, and the two core wires are bonded by an adhesive.
Example 2 may include elements of example 1, in which the adhesive is a room temperature curable adhesive.
Example 3 may include elements of example 2, in which the adhesive is coated on a surface of the insulating layer of the core wire.
Example 4 may include elements of example 3, in which a cross-sectional area of the core wire is in a range of 0.13 mm² to 0.5 mm².
Example 5 may include elements of example 4, in which a coating thickness of the adhesive on the surface of the insulating layer is in a range of 0.01 mm to 0.1 mm.
Example 6 may include elements of example 5, in which the twisted pair cable has a twisted pitch of 8 mm to 22 mm.
Example 7 may include elements of example 6, in which a twisted separation force of the two core wires is 5N to 30N.
Example 8 may include elements of example 7, in which the twisted separation force of the two core wires is 5N to 10N.
Example 9 provides an unshielded cable, comprising at least four groups of the twisted pair cables as described in any of the examples 1 to 8, a skeleton and a jacket, wherein the skeleton divides an inner space of the jacket into at least four chambers, and the at least four groups of the twisted pair cables are distributed in the at least four chambers.

While this invention has been described in terms of the preferred embodiments thereof, it is not intended to be so limited, but rather only to the extent set forth in the claims that follow. For example, the above-described embodiments (and/or aspects thereof) may be used in combination with each other. In addition, many modifications may be made to configure a particular situation or material to the teachings of the invention without departing from its scope. Dimensions, types of materials, orientations of the various components, and the number and positions of the various components described herein are intended to define parameters of certain embodiments, and are by no means limiting and are merely prototypical embodiments.

Many other embodiments and modifications within the spirit and scope of the claims will be apparent to those of skill in the art upon reviewing the above description. The scope of the invention should, therefore, be determined with reference to the following claims, along with the full scope of equivalents to which such claims are entitled.

As used herein, 'One or more' includes a function being performed by one element, a function being performed by more than one element, *e.g.,* in a distributed fashion, several functions being performed by one element, several functions being performed by several elements, or any combination of the above.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

While terms of ordinance or orientation may be used herein these elements should not be limited by these terms. All terms of ordinance or orientation, unless stated otherwise, are used for purposes distinguishing one element from another, and do not denote any particular order, order of operations, direction or orientation unless stated otherwise.

## Claims

1. A twisted pair cable, comprising:
two core wires, wherein each core wire includes a conductor (1) and an insulating layer (2) wrapping the conductor (1), wherein the two core wires are twisted together to form a twisted pair structure and wherein the two core wires are bonded by an adhesive (3).

2. The twisted pair cable in accordance with claim 1, wherein the adhesive (3) is a room temperature curable adhesive (3).

3. The twisted pair cable in accordance with claim 1 or 2, wherein the adhesive (3) is coated on a surface of the insulating layer (2) of the core wire.

4. The twisted pair cable in accordance with any one of claims 1 to 3, wherein a cross-sectional area of the core wire is in a range of 0.13 mm² to 0.5 mm².

5. The twisted pair cable in accordance with any one of claims 1 to 4, wherein a coating thickness of the adhesive (3) on the surface of the insulating layer (2) is in a range of 0.01 mm to 0.1 mm.

6. The twisted pair cable in accordance with any one of claims 1 to 5, wherein the twisted pair cable has a twisted pitch in a range of 8 mm to 22 mm.

7. The twisted pair cable in accordance with any one of claims 1 to 6, wherein a twisted separation force of the two core wires is in a range of 5N to 30N.

8. The twisted pair cable in accordance with any one of the claims 1 to 7, wherein the twisted separation force of the two core wires is 5N to 10N.

9. An unshielded cable, comprising:
four groups of the twisted pair cable in accordance with any one of claims 1 to 8;
a cross-shaped skeleton (4); and
a jacket (5), wherein the cross-shaped skeleton (4) divides an inner space of the jacket (5) into four chambers and wherein the four groups of the twisted pair cable are distributed in the four chambers.
